# EUROPEAN PATENT SPECIFICATION

(11) **EP 0 174 848 B1**
(45) Date of publication and mention of the grant of the patent: **27.01.1993**
(21) Application number: 85306469.9
(22) Date of filing: 11.09.1985
(51) Int. Cl.: C11B 3/00, A23C 15/14

(54) **Improvements in or relating to methods of removing compounds**
Verfahren zur Entfernung von Verbindungen
Procédé pour éliminer des composés

(30) Priority: 11.09.1984 NZ 209508
(43) Date of publication of application: 19.03.1986
(73) Proprietor: NEW ZEALAND DAIRY RESEARCH INSTITUTE, Palmerston North (NZ)
(72) Inventor: Keen, Alan Robert Dairy Res. Inst., Fitzherbert West Palmerston North (NZ)
(74) Representative: Brown, John David

(56) References cited:
- FR-A- 1 574 487
- US-A- 3 450 541
- US-A- 4 277 412
- FETTE, SEIFEN, ANSTRICHMITTEL, vol. 76, no. 10, 1974, pages 433-435, Hamburg, DE; E.HOMBERG: "Veränderung der Sterine durch industrielle Verarbeitungsprozesse von Fetten u. Ölen:Einfluss der Raffinationsbedingungen auf den Steringehalt und die Sterinzusammensetzung

## Description

THIS INVENTION relates to methods of removing sterols from fats and oils and/or fats and oils from which sterols have been removed and has been devised particularly though not solely for the purpose of removing cholesterol from milkfat.

It is an object of the present invention to provide a method of removing sterols from fats and oils and/or fats and oils from which sterols have been removed, which will at least provide the public with a useful choice.

The prior art does not in general deal with the removal of cholesterol but uses, in particular, adsorbents for the removal of odoriferous materials and relates to selective adsorption of triglyceride (US-A-4,277,412) using adsorbents at a lower contact time than envisaged in the present invention. WO83/01782 (which also refers to US-A-2976156 and US-A-3955004) describes the use of an adsorbent but not repeatedly or for an extended contact time.

"Fette, Seifen, Austrichmittel", Vol 76, No. 10, 1974, pp433-435 discloses that the use of Tonsil, a bleaching earth, used in the refining of fats and oils gives rise in the presence of cholesterol to the production of unwanted cholesterol derivatives.

US-A-3450541 discloses the use of digitonin carried by celite to remove cholesterol from lipids. The cholesterol reacts with the digitonin to form an insoluble digitonide complex.

According to the present invention there is provided a method of removing sterols from fat and/or oil, said method comprising the steps of maintaining the fat and/or oil in liquid condition and contacting the liquid fat and/or oil with an absorbent or adsorbent material, the absorbent or adsorbent material and the time of exposure of the fat or oil to the absorbent or adsorbent being such as to remove substantially all sterols, especially cholesterol, from the fat and/or oil, by adsorption and/or absorption only, wherein the absorbent or adsorbent material is not Tonsil.

The invention also comprises an oil and/or fat which has been treated in accordance with the method of the present invention.

One preferred form of the invention will now be described. In the preferred form of the invention it is broadly envisaged that an oil and/or fat for example fats and oils of vegetable and/or animal origin (including fish fats and/or oils) is treated and we will describe the preferred form in relation to the removal of cholesterol from anhydrous milkfat.

To put the method into operation, the oil and/or fat is maintained at a temperature which maintains the fat and/or oil liquid and preferably one which reduces the viscosity of the liquid fats and oils to a value which facilitates adsorption or absorption of the sterols on to or into the active adsorbents or absorbents. Preferably the treating material comprises an adsorbent which include active carbons, earths and clays either pulverised or granulated, in other words in a particulate condition.

During the process above described some oils and fats may lose their characteristic flavour, colour and oxidative stability. After deodorization for example by using equipment common to the vegetable oil industry, undesirable flavours are removed from the treated oil or fat. Both desired colour, flavour and oxidative stability may be added back using natural, nature identical or artifical components.

The process may be effected either as a continuous or batch system and as an example, in the continous method, hot milkfat for example anhydrous milkfat at 70-90°C is slowly percolated through a column of granulated (12 x 40 mesh, particle diameter range of 420 µm to 1.68 mm) active carbon (type APC (trade mark), Calgon Corp., U.S.A.). At least the initial fractions obtained were substantially cholesterol free. In a batch procedure, a quantity of milk fat again preferably anhydrous milkfat held at 70-90°C is vigorously stirred with 2.5% active pulverized carbon (type NAP (trade mark) Calgon Corp., U.S.A.) for one hour. After this period of time the pulverized carbon is removed by filtration and the process is repeated a number of times until the milkfat is cholesterol free or substantially free of cholesterol.

It will be seen that by the processes above described or either of them a product is achieved which has had sterols removed therefrom. In the examples given, the undesirable compound which is removed is cholesterol. This has considerable advantages in industry.

In a more elaborate continuous procedure a pulsed bed of APC (trade mark) granulated carbon (10 x 40 mesh, particle diameter range of 420 µm to 2 mm.) is used. Anhydrous milkfat (AMF) at an elevated temperature (e.g. 80°c) is pumped at a controlled rate up through the carbon column. The carbon column is pulsed (i.e. a fresh portion of granulated carbon is added to the top of the column and an equivalent portion of spent carbon removed from the bottom of the column) at intervals selected to maintain the desired level of cholesterol (zero or relatively low) in the treated AMF.

The treated AMF can then be deodorized in a vegetable oil deodorizer and stabilized against oxidative deterioration by the addition of a suitable antioxidant/S preferably natural such as Eastmans (USA) Tenx GT-1 or Vitamin E 4-50. Yellow colour (B-Carotene) can be restored by the addition of B-Carotene (Roche Switzerland). "Eastmans", "Tenx" and "Roche" are trade marks.

A suitable milkfat is thus obtained which has been used for the manufacture of a wide range of products (including dairy products) which have zero or low levels of cholesterol i.e. butters, cheeses, cottage cheeses, ice creams, and low cholesterol liquid milks of varying fat content. Where necessary flavour (natural, nature identical or artifical) has been used in the formulation of the products in order to restore the expected flavour of the product which was absent due to the initial treatment of the AMF.

## Claims

1. A method of removing sterols from fat and/or oil, said method comprising the steps of maintaining the fat and/or oil in liquid condition and contacting the liquid fat and/or oil with an absorbent or adsorbent material, the absorbent or adsorbent material and the time of exposure of the fat or oil to the absorbent or adsorbent being such as to remove substantially all sterols, especially cholesterol, from the fat and/or oil by adsorption and/or absorption only, wherein the absorbent or adsorbent material is not Tonsil

2. A method according to Claim 1, wherein the temperature of the fat or oil is maintained at a temperature in the range of from 70 to 90°C such as to reduce the viscosity of the liquid fat and/or oil to a value which facilitates absorption or adsorption of the sterols on to the active absorbent or adsorbent.

3. A method according to Claim 1 or 2, wherein the fat or oil for treatment includes fats and oils of vegetable and/or animal origin including fats or oils from fish.

4. A method according to Claim 1 or 2, wherein the fat and/or oil is milk fat.

5. A method according to Claim 1 or 2, wherein the fat and/or oil is anhydrous milk fat.

## Patentansprüche

1. Verfahren zur Entfernung von Sterolen aus Fett und/oder Öl, wobei das Verfahren die Schritte umfaßt, daß das Fett und/oder Öl in flüssigem Zustand gehalten wird und das flüssige Fett und/oder Öl mit einem absorbierenden oder adsorbierenden Material in Kontakt gebracht wird, wobei das absorbierenden oder adsorbierende Material und die Einwirkzeit des Absorptionsmittels oder Adsorptionsmittels auf das Fett oder Öl derart ist, daß im wesentlichen alle Sterole, insbesondere Cholesterin, aus dem Fett und/oder Öl nur durch Adsorption und/oder Absorption entfernt werden, wobei das absorbierende oder adsorbierende Material nicht Tonsil ist.

2. Verfahren nach Anspruch 1, dadurch gekennzeichnet, daß die Temperatur des Fettes oder Öls bei einer Temperatur im Bereich von 70 bis 90°C gehalten wird, um die Viskosität des flüssigen Fettes und/oder Öls auf einen Wert abzusenken, der Absorption oder Adsorption der Sterole auf dem aktiven Absorptionsmittel oder Adsorptionsmittel erleichtert.

3. Verfahren nach Anspruch 1 oder 2, dadurch gekennzeichnet, daß das zu behandelnde Fett oder Öl Fette und Öle pflanzlichen und/oder tierischen Ursprungs einschließt, einschließlich Fette oder Öle aus Fisch.

4. Verfahren nach Anspruch 1 oder 2, dadurch gekennzeichnet, daß das Fett und/oder Öl Milchfett ist.

5. Verfahren nach Anspruch 1 oder 2, dadurch gekennzeichnet, daß das Fett und/oder Öl wasserfreies Milchfett ist.

## Revendications

1. Une méthode d'élimination de stérols de graisses et/ou d'huiles, méthode selon laquelle on maintient la graisse et/ou l'huile à l'état liquide et on met le liquide en contact avec une matière absorbante ou adsorbante telle, et pendant un temps de contact tel, que tous les stérols en soient pratiquement éliminés, en particulier le cholestérol, par adsorption et/ou absorption seulement, méthode dans laquelle la matière absorbante ou adsorbante n'est pas le produit Tonsil.

2. Une méthode selon la revendication 1 dans laquelle on maintient la graisse ou l'huile à une température de 70 à 90°C de manière à abaisser la viscosité du liquide à un degré facilitant l'absorption ou l'adsorption des stérols dans ou sur l'absorbant ou l'adsorbant.

3. Une méthode selon la revendication 1 ou 2 dans laquelle les graisses ou huiles comprennent des graisses ou huiles d'origine végétale et/ou animale, y compris des graisses et huiles de poissons.

4. Une méthode selon la revendication 1 ou 2 dans laquelle la graisse est la matière grasse de lait.

5. Une méthode selon la revendication 1 ou 2 dans laquelle la graisse est de la matière grasse de lait anhydre.
